# EUROPEAN PATENT APPLICATION

(11) **EP 4 588 996 A1**
(43) Date of publication of application: **23.07.2025**
(21) Application number: 23865042.8
(22) Date of filing: 05.07.2023
(51) Int. Cl.: C12G 3/022

(54) **LOW-ALCOHOL BEVERAGE, AND METHOD FOR PRODUCING SAME**

(30) Priority: 13.09.2022 WO PCT/JP2022/034226
(71) Applicant: Kikkoman Corporation, Noda-shi, Chiba 278-8601 (JP)
(72) Inventor: HASHIGUCHI, Izumi, Noda-shi, Chiba 278-8601 (JP); TAKEICHI, Junya, Noda-shi, Chiba 278-8601 (JP)
(74) Representative: Schulz Junghans Patentanwälte PartGmbB
(86) International application number: PCT/JP2023/024896
(87) International publication number: WO 2024/057680

(57) **Abstract**

The object of the present invention is achieved by a low-alcohol beverage having an alcohol concentration of 6% (v/v) to 13% (v/v), an sake meter value of -30 to +10, an amino acid content of 2.0 to 10.0, and an acidity of 5.0 to 10.0; and a low-alcohol beverage having an alcohol concentration of 6% (v/v) to 13% (v/v), a pantolactone content of 800 ppb to 10, 000 ppb, and a eugenol content of 100 ppb to 10, 000 ppb, and other such beverage.

## Description

### Technical Field

The present invention relates to a low-alcohol beverage and a method of producing the low-alcohol beverage.

### Background Art

Alcohol beverages are widely enjoyed when eating meals. However, there is compatibility between an alcohol beverage and food, thus each alcohol beverage is selected to be compatible with a food. For example, red wine is preferable as alcohol during meals which has good compatibility with meat-based foreign dishes (Western food). However, red wine is not easy to drink due to its high alcohol concentration, and then tends to be avoided by health-conscious consumers.

Meanwhile, sake is widely enjoyed with Japanese dishes (Japanese food) which is based on vegetables, grains and fish, and born from the Japanese climate. Sake also has rice-derived sweetness and a mellow aroma, and it is now very popular in the world. However, sake, particularly sake having a low alcohol content, has strong sweetness in addition to its mellow aroma, tending to be less compatible with Western food than red wine.

Some of sake which have a similar flavor and/or good appearance as that of red wine, are known. For example, red wine-like sake which is obtained by using polished rice as "rice for *koji* (*koji-mai*) " and unpolished purple black rice as "rice for *kake* (*kake-mai*)*",* is known (See, for example, Patent Document 1).

Low-alcohol sake which exhibits a color of red just like red wine and also has a low alcohol concentration is known. As for such low-alcohol sake, for example, sake having a sake meter value of -50 to -100, an alcohol content of 5.0% to 10.0%, an acidity of 5.5 to 14.4, citric acid of 3,500 mg/liter to 9,500 mg/liter, and polyphenol of 300 mg/liter to 1,600 mg/liter, is known (See, for example, Patent Document 2).

As a method of producing alcohol-fermented beverages and foods which exhibit a color of red and have mild flavors, a method comprising the steps: subjecting a raw material to saccharification treatment and organic acid treatment and then to solid-liquid separation to obtain a separated liquid; and subjecting the separated liquid to alcohol fermentation treatment, is known (See, for example, Patent Document 3).

As such low-alcohol sake, for example, sake having a sake meter value of -10 to -20, an alcohol content of 7% to 11%, an acidity of 7 to 13, and an amino acid content of 1 to 6, is known (See, for example, Non-Patent Document 1).

### Citation List

### Patent Documents

[Patent Document 1] Japanese Unexamined Patent Publication No.2000-60528
[Patent Document 2] Japanese Unexamined Patent Publication No.2005-348607
[Patent Document 3] Japanese Unexamined Patent Publication No.2008-43299

### Non-Patent Documents

[Non-Patent Document 1] Jizake [Online], 2022.03.20 [retrieved on 2022.10.05], Internet: <http://www.nommlier.jp/dizake/dizake.htm> Germinated unpolished rice sake "Musuhi" MUSUBI

### Summary of Invention

### Problems to be Solved by the Invention

Sake as described in Patent Document 1 is red wine-like sake, however, it has a problem that its alcohol concentration is as high as that of red wine. Also, sake as described in Patent Document 2 has a sake meter value of -50 to -100, which means it has a problem that it has very strong sweetness. Furthermore, the present inventors have found that alcohol-fermented beverage and food obtained according to the method as described in Patent Document 3 also have a problem that its sake meter value is below -30 and it has strong sweetness. Furthermore, sake as described in Non-Patent Document 1 has a problem that it does not have strong sweetness, but it has undesirable flavors because most of the rice, including rice for *koji,* as a raw material is unpolished rice. Such undesirable flavors make sake unsuitable for alcohol during meals, especially for alcohol during meals having compatibility with Western food.

In light of the above, little is known of low-alcohol beverages suitable for alcohol during meals that have a low alcohol concentration and are compatible with Western food.

Therefore, the object of the present invention is to provide a low-alcohol beverage in which the alcohol concentration is low, but the sweetness is reduced.

### Means of Solving the Problems

The present inventors have conducted extensive research to solve the above-described object and have attempted to obtain a low-alcohol beverage with reduced sweetness by combining multiple ingredients as well as methods for production as appropriate.

After much trial and error, the present inventors finally succeeded in obtaining a low-alcohol beverage with reduced sweetness by adding ancient rice and a "rice *koji (kome-koji)"* to a rice-saccharified liquid, and subjecting the mixture to high-temperature decomposition treatment, and then to a short-period of low-temperature fermentation treatment. Surprisingly, the resulting low-alcohol beverage had a high acidity and also a high amino acid content, resulting in that it has a good flavor and excellent palatability.

More surprisingly, the resulting low-alcohol beverage was found to contain extremely higher amounts of the scent components pantolactone and eugenol than that of ordinary sake. In other words, the low-alcohol beverage was found to be highly palatable due to the high concentration of scent components. The present invention has been completed based on these findings and successful examples.

Thus, according to each aspect of the present invention, the following are provided:
[1] A low-alcohol beverage, having
   an alcohol concentration of 6% (v/v) to 13% (v/v),
   a sake meter value of -30 to +10,
   an amino acid content of 2.0 to 10.0, and
   an acidity of 5.0 to 10.0.
[2] The low-alcohol beverage according to [1], wherein the low-alcohol beverage is a low-alcohol fermented beverage, and a fermentation raw material comprises a rice-saccharified liquid and a rice *koji.*
[3] The low-alcohol beverage according to [2], the fermentation raw material comprises further ancient rice.
[4] The low-alcohol beverage according to [1], further having a citric acid content of 3.00 mg/mL or more.
[5] The low-alcohol beverage according to [1], further having a turbidity of 50 degrees or less.
[6] The low-alcohol beverage according to any one of [1] to [5], further exhibiting a color of red.
[7] A low-alcohol beverage, having
   an alcohol concentration of 6% (v/v) to 13% (v/v),
   a pantolactone content of 800 ppb to 10, 000 ppb, and
   a eugenol content of 100 ppb to 10, 000 ppb.
[8] A method of producing a low-alcohol beverage, comprising the steps of:
   subjecting a fermentation raw material comprising a rice-saccharified liquid, ancient rice and a rice *koji* to high-temperature decomposition treatment at 50°C to 80°C for 1 hour to 10 hours to obtain a *moromi;*
   subjecting the *moromi* to fermentation treatment using a yeast at 10°C to 25°C for 3 days to 7 days to obtain a mature *moromi;* and
   subjected the mature *moromi* to solid-liquid separation treatment to obtain the low-alcohol beverage.
[9] The method according to [8], wherein the rice *koji* comprises a rice *koji* made using a yellow *koji* mold and a rice *koji* made using a white *koji* mold.
[10] The method according to [8], wherein the ancient rice is black rice.
[11] The low-alcohol beverage according to [1] or [7], wherein the low-alcohol beverage is produced by the method according to any one of [8] to [10].

### Effects of Invention

According to the present invention, the low-alcohol beverage can be obtained wherein the alcohol concentration is low and the sweetness is reduced. According to the present invention, the low-alcohol beverage can be obtained wherein the appropriate sourness is imparted and the flavor is enhanced. Therefore, the low-alcohol beverage of the present invention is suitable for alcohol during meals, and is especially compatible with Western food, since the sweetness is reduced, the sourness and *umami* (delicious savory taste) are imparted, and the strong alcohol taste can be perceived. Besides, the low-alcohol beverage of the present invention has extremely high contents of scent components pantolactone and eugenol compared to ordinary sake, therefore the present invention provides the low-alcohol beverage that is highly palatable as an alcohol beverage.

### Brief Description of Drawings

[Fig.1] Fig.1 shows the results of the sensory evaluation of test alcohol beverage 1 for "thickness of taste" and *"umami,"* as described in the examples below.
[Fig.2] Fig.2 shows the results of the sensory evaluation of test alcohol beverage 5 for "fragrance," "favorable and strong aftertaste (*oshi-aji*)," "thickness of taste," and "herbaceous smell," as described in the examples below.
[Fig.3] Fig.3 shows the result of the measurement of test alcohol beverages, commercially available wine, and commercially available sake using a taste sensor as described in the examples below.
[Fig.4] Fig.4 shows the result of the sensory evaluation of test alcohol beverages and commercially available sake for compatibility with Western food as described in the examples below.
[Fig.5] Fig.5 shows the result of the sensory evaluation of sake 6 for "undesirable flavors" as described in the examples below.

### Description of Embodiments

Each embodiment of the present invention will now be described in detail. The technical scope of the present invention is not limited to the matter in this section; rather, the present invention may take various other forms to the extent that its objectives are achieved.

Unless otherwise specified, each term used herein is used in the meaning commonly used by those skilled in the art and should not be construed to have any meaning that is unduly limiting. In addition, the speculations and theories made herein are based on the knowledge and experience of the inventors to date, and the present invention is not restricted by such speculations and theories alone.

The term "raw material" means a substance to be used (added) in the manufacture of a composition, etc., and may be present in the composition, etc., in a state that it is maintained or changed qualitatively and/or quantitatively compared to before use.

The term "ppb" is a unit of measure as it is usually known; specifically, 1 ppb is 1/10⁹, and the gram equivalent is 1 ng/g.

The term "and/or" means any one, or an arbitrary combination of two or more, or a combination of all of a plurality of related items listed.

The term "content" is synonymous with concentration and refers to the ratio of the amount of a component to the total amount of the composition. However, the total content of the components may not exceed 100%.

The wording "to" for indicating a range of values is intended to include values preceding and following the wording; for example, "0 % to 100 %" means a range from 0 % or more and 100 % or less. The terms "more than" and "less than" mean the lower and upper limits without including a value following the term, respectively. For example, "more than 1" means a value beyond 1, and "less than 100" means a value below 100.

The terms "include," "comprise," "have," and "contain" mean that an element(s) other than an element(s) as explicitly indicated can be added as inclusions, which are, for example, synonymous with "at least include," but encompasses the meaning of "consist of" and "substantially consist of". In other words, the terms may mean, for example, to include an element(s) as explicitly indicated as well as any one element or any two or more elements, to consist of an element(s) as explicitly indicated, or to substantially consist of an element(s) as explicitly indicated. Such elements include limitations such as components, steps, conditions, and parameters.

The term "aroma" means scent, flavor, or both.

The term "scent" means smell that is perceived only via the nose (orthonasal), not via the mouth. In the present description, simply "smell" means scent.

The term "flavor" means smell that passes from the oral cavity to the nose when taken into the mouth (retronasal), taste that is perceived on the tongue (tastes) when put into the mouth, or both.

The terms "fermentation" and "mature" are not strictly distinguished, and they may be collectively referred to as fermentation.

The number of digits of an integer equals to its significant figure. For example, 1 has one significant figure and 10 has two significant figures. For a decimal number, the number of digits after a decimal point equal to its significant figure. For example, 0.1 has one significant figure and 0.10 has two significant figures.

The low-alcohol beverage according to one embodiment of the present invention has an alcohol concentration of 6% (v/v) to 13% (v/v), a sake meter value of -30 to +10, an amino acid content of 2.0 to 10.0, and an acidity of 5.0 to 10.0.

### [Alcohol concentration]

The alcohol concentration of the low-alcohol beverage according to one embodiment of the present invention is 6% (v/v) to 13% (v/v), preferably 6% (v/v) to 12% (v/v), more preferably 8% (v/v) to 11.5% (v/v). The low-alcohol beverage according to one embodiment of the present invention has a lower alcohol concentration than that of common wine and sake etc.

The alcohol concentration (alcohol content) is expressed as percentage of the volume concentration of alcohol (ethanol) relative to the total volume of the sample, and is measured as described in the examples below.

### [Sake meter value]

The sake meter value of the low-alcohol beverage according to one embodiment of the present invention is -30 to +10, preferably -20 to +8, and more preferably -10 to +5.

The sake meter value is a value that expresses the specific gravity of sake relative to water. Specifically, a high degree of "+" indicates a low sugar content and a dry taste, while a low degree of "+" indicates a high sugar content and a sweet taste. The low-alcohol beverage according to one embodiment of the present invention has a higher sake meter value and more reduced sweetness than conventional low-alcohol sake.

The sake meter value is measured by the method as described in the examples below.

### [Amino acid content]

The amino acid content of the low-alcohol beverage according to one embodiment of the present invention is 2.0 to 10.0, preferably 2.2 to 8.0.

The amino acid content is related to *umami* and a rich taste (*gokumi*)*.* Specifically, a higher amino acid content gives a strong taste, while a lower amino acid content gives a light taste. The low-alcohol beverage according to one embodiment of the present invention has the higher amino acid content than common wine and sake, and then has *umami* and a rich taste enhanced.

The amino acid content is measured by the method as described in the examples below.

### [Acidity]

The acidity of the low-alcohol beverage according to one embodiment of the present invention is 5.0 to 10.0, preferably 6.0 to 9.0.

The acidity is related to sourness, specifically, higher values of acidity give more sourness. The acidity is also related to the depth of taste, and higher values give a stronger taste. The low-alcohol beverage according to one embodiment of the present invention has the acidity comparable to that of common red wine, and has more acidity than that of common sake or other alcohol beverage, and then has sourness and a stronger taste enhanced.

The acidity is measured as described in the examples below.

Since the alcohol concentration, the sake meter value, the amino acid content, and the acidity are in the above ranges, the low-alcohol beverage according to one embodiment of the present invention has the low alcohol concentration, but the sweetness reduced and appropriate sourness and *umami* enhanced, as a result, these tastes and alcohol tastes are well perceived. Thus, the low-alcohol beverage according to one embodiment of the present invention is suited for alcohol during meals, and is especially compatible with Western food.

The method of producing the low-alcohol beverage according to one embodiment of the present invention is not particularly limited as long as the alcohol concentration, the sake meter value, the amino acid content, and the acidity are in the above-mentioned ranges. The low-alcohol beverage of one embodiment of the present invention can be produced, for example, by a method of producing the low-alcohol beverage according to one embodiment of the present invention comprising the following steps (1) to (3) below.
(1) Subjecting a fermentation raw material comprising a rice-saccharified liquid, ancient rice and a rice *koji* to high-temperature decomposition treatment at 50°C to 80°C for 1 hour to 10 hours to obtain a *moromi* (sake mash) (high-temperature decomposition treatment).
(2) Subjecting the *moromi* to fermentation treatment using a yeast at 10°C to 25°C for 3 days to 7 days to obtain a mature *moromi* (fermentation treatment).
(3) Subjecting the mature *moromi* to solid-liquid separation treatment to obtain the low-alcohol beverage (solid-liquid separation treatment).

According to the above production method, the low-alcohol beverage according to one embodiment of the present invention can be produced, therefore, it is preferable that the low-alcohol beverage according to one embodiment of the present invention is the low-alcohol fermented beverage, and its fermentation raw material comprises the rice-saccharified liquid, the ancient rice, and the rice *koji.*

The method of producing the low-alcohol beverages according to one embodiment of the present invention will now be described in detail.

### [High-temperature decomposition treatment]

In the high-temperature decomposition treatment, the fermentation raw material comprising a rice-saccharified liquid, ancient rice, and a rice *koji* is subjected to high-temperature decomposition treatment at 50°C to 80°C, preferably 50°C to 60°C, for 1 hour to 10 hours, preferably 2 hours to 4 hours, to obtain a *moromi.* In the present invention, the fermentation raw material is subjected to a relatively short period of high temperature treatment, which causes the saccharification of the fermentation raw material to become relatively short period. This relatively short period of saccharification leads to relatively reduced glucose production, and accordingly the glucose concentration is reduced. Then, the resulting low-alcohol beverage is expected to have a high sake meter value.

The method of high-temperature decomposition treatment is not particularly limited, but includes agitation while heating.

In the high-temperature decomposition, specifically, water is added to the fermentation raw material and subjected to high-temperature decomposition treatment. The amount of water added is not limited, but is, for example, 20% by mass to 50% by mass of the fermentation raw material.

### [Rice-saccharified liquid]

Regarding the rice-saccharified liquid, the rice-saccharified liquid and production method thereof as described in the patent document (See Patent No. JP6243475; The entire document is incorporated as disclosed herein.) are known. Specifically, the rice-saccharified liquid can be obtained by performing a steam injection treatment on a mixture of rice, liquefying enzyme, and water, and holding the mixture at a temperature of 90°C to 150°C for 1 minute to 3.5 minutes. The rice used may include non-glutinous rice, glutinous rice, and the like. The liquefying enzyme used may include amylase and the like. The mixing ratio (mass ratio) of rice, liquefying enzyme, and water is not particularly limited, but for example, the mixing ratio of rice and water is 90 to 130 of water with respect to 100 of rice, and the amount of liquefying enzyme used is 1/2000 to 1/5000 of the rice weight.

The steam injection treatment includes, for example, a direct injection method by applying a steam jet, or an injection method in which a liquefed or emulsified solution is instantaneously heated by indirect external heating, and rapidly gelatinized and mixed for decomposition of starch contained in the liquefied or emulsified material. Specific means include, for example, RotaTherm (registered trademark), KID's Cooker (registered trademark), etc.

In the present invention, the use of the rice-saccharified liquid as a fermentation raw material in the high-temperature decomposition treatment allows the resulting low-alcohol beverage to have the high amino acid content. In other words, *umami* and thickness of taste can be imparted to the resulting low-alcohol beverage.

The amount of rice-saccharified liquid added is not particularly limited, but is, for example, 10% by mass to 60% by mass of the fermentation raw material, preferably 20% by mass to 50% by mass.

### [Ancient rice]

The ancient rice is a general term for rice that strongly retains the characteristics of ancient primeval species, and includes not only ancient native and foreign species, but also improved species that have been bred from these species. The ancient rice used in the present invention is not particularly limited, but colored rice such as black rice, red rice, purple-black rice, green rice, black-brown rice, red-brown rice, and purple-red rice is preferable. Particularly, black rice which contains anthocyanin-based pigments is preferable from the viewpoint of obtaining a low-alcohol beverage with a reddish appearance. The ancient rice can be one type alone or a combination of two or more types. The ancient rice can also be used mixed with white rice. The form of ancient rice includes, but is not limited to, granular form (unpolished rice, polished rice, and sprouted rice), bran form, pulverized form, or a combination of these forms. The ancient rice used may be steamed or unsteamed, but from the standpoint of controlling contaminating bacteria, steaming is preferable.

The amount of ancient rice added is not particularly limited, but is, for example, 0.1% by mass to 20% by mass, and preferably 0.5% by mass to 10% by mass, of the fermentation raw material.

### [Rice koji]

The rice *koji* is made by growing *koji* mold on steamed rice. In the present invention, the rice *koji* used is not particularly limited as long as it is a rice *koji* that is commonly used in the production of alcohol beverages such as sake and *shochu,* and examples thereof include: a rice *koji* made using a yellow *koji* mold *"Aspergillus oryzae",* which is used as so-called *sake koji;* a rice *koji* made using a white *koji* mold *"Aspergillus kawachi"* and a rice *koji* made using a black *koji* mold *"Aspergillus awamori",* which are used as so-called *shochu koji.* The rice *koji* can be one type alone or a combination of two or more types. The rice *koji* used is preferably a combination of the rice *koji* made using the yellow *koji* mold and the rice *koji* made using the white *koji* mold. Particularly, the rice *koji* made using the white *koji* mold is preferred from the viewpoint of imparting a high organic acid content (particularly, citric acid), i.e., sourness, to the resulting low-alcohol beverage.

The rice *koji* produced according to conventional methods or commercially available one can be used.

The amount of rice *koji* added is not limited, but is, for example, 5 % by mass to 40 % by mass, more preferably 10 % by mass to 30% by mass of the fermentation raw material.

The fermentation raw material preferably comprises a rice-saccharified liquid, ancient rice and a rice *koji,* but may also comprise other ingredients. Examples of other ingredients include, for example, wheat, barley, and corn.

### [Fermentation treatment]

In the fermentation treatment, the resulting *moromi* obtained in the high-temperature decomposition treatment is subjected to fermentation treatment using a yeast at 10° C to 25° C, preferably 10° C to 20° C, for 3 days to 7 days, preferably 4 days to 6 days, to obtain the mature *moromi.* In the present invention, such short period of low-temperature fermentation treatment prevents full formation of alcohol from glucose, thus enabling to lower the alcohol concentration.

The method of fermentation treatment of *moromi* can be carried out according to the usual production method of alcohol beverages, for example, a method by stirring it in a closed container at 10°C to 25°C for 3 days to 7 days and removing air from the mixture as appropriate, in accordance with normal alcohol beverage management.

### [Yeast]

The yeast is not particularly limited as long as it is a yeast that is commonly used in the production of alcohol beverages such as sake and shochu, and examples thereof include Kyokai Yeast No. 701, Kyokai Yeast No. 901, and a wine yeast. The yeast can be one type alone or a combination of two or more types. The yeast used is preferably Kyokai Yeast No. 701, as it is widely used for regular brewing.

The yeast may be in the form of a dried yeast inactivated by heat treatment, or a yeast extract. The yeast extract is a yeast-dissolved solution extracted by autolysis method, enzyme addition method, or hot water extraction method.

The amount of yeast added is not limited, but is, for example, 1.0 x 10⁴ cells/mL to 1.0 x 10⁷ cells/mL, preferably 1.0 x 10⁵ cells/mL to 1.0 x 10⁶ cells/mL with respect to a *moromi.*

### [Solid-liquid separation treatment]

In the solid-liquid separation treatment, the resulting mature *moromi* obtained in the fermentation treatment is subjected to solid-liquid separation treatment to obtain the low-alcohol beverage.

Methods of solid-liquid separation treatment for the mature *moromi* includes commonly known solid-liquid separation methods, specifically, expression, filtration treatments, etc. The solid-liquid separation treatment can be carried out by using one of the above-mentioned treatment methods alone or in combination of two or more, however, it is preferable to include a filtration treatment that can remove yeast cells, allowing to reduce undesirable flavors.

The low-alcohol beverage obtained as above has preferably a turbidity of 50 degrees or less, more preferably 40 degrees or less. Regarding the turbidity of low-alcohol beverages, lower turbidity makes the beverage to be clearer and makes undesirable flavors to be more reduced. Therefore, the lower limit of the turbidity is preferable when lower, and is not particularly limited, but is, for example, 1 degree. The turbidity of 50 degrees or less provides clarity, reduced unnecessary substances and undesirable flavors, good flavors, and excellent palatability. As for turbidity, the degree of the turbidity of standard kaolin solution which is prepared by adding 1 mg of standard kaolin to 1 L of purified water, is defined as "1 degree", in accordance with "9. Turbidity" of JIS K0101 "Test Methods for Industrial Water". The turbidity is measured as described in the examples below.

As for the method of producing the low-alcohol beverage according to one embodiment of the present invention, various steps or operations can be added before, after, and/or in each of the steps as long as the object of the present invention can be achieved. For example, the resulting low-alcohol beverage obtained in the solid-liquid separation treatment may be subjected to pasteurization treatment, such as heating.

Furthermore, according to the above-mentioned production method, the low-alcohol beverage can be obtained having the alcohol concentration of 6% (v/v) to 13% (v/v), the pantolactone content of 800 ppb to 10,000 ppb, and the eugenol content of 100 ppb to 10,000 ppb. Another embodiment of the present invention is the low-alcohol beverage having the alcohol concentration of 6% (v/v) to 13% (v/v), the pantolactone content of 800 ppb to 10, 000 ppb, and the eugenol content of 100 ppb to 10, 000 ppb.

While the low-alcohol beverage according to another embodiment of the present invention can be produced by the above production method, it can be prepared by externally adding the pantolactone and eugenol such that predetermined amounts are achieved, to the low-alcohol beverage having the alcohol concentration of 6% (v/v) to 13% (v/v).

Here, the pantolactone and eugenol can impart desirable aromas such as "fragrance," "favorable and strong aftertaste," "thickness of taste," and "herbaceous smell" to alcohol beverages.

### [Pantolactone content]

The pantolactone content of the low-alcohol beverage according to another embodiment of the present invention is 800 ppb to 10,000 ppb, preferably 800 ppb to 50,000 ppb. The low-alcohol beverage according to another embodiment of the present invention has the higher pantolactone content compared to ordinary sake and conventional low-alcohol sake, and then fragrance and favorable and strong aftertaste enhanced.

The pantolactone content can be measured by the method as described in the examples below.

### [Eugenol content]

The Eugenol content of the low-alcohol beverage according to another embodiment of the present invention is 100 ppb to 10,000 ppb, preferably 100 ppb to 3,000 ppb. The low-alcohol beverage according to another embodiment of the present invention has the higher eugenol content compared to ordinary sake and conventional low-alcohol sake, and then thickness of taste and herbaceous smell enhanced.

The eugenol content can be measured by the method as described in the examples below.

The low-alcohol beverage according to another embodiment of the present invention is highly palatable, because its pantolactone content and eugenol content are in the above ranges, which impart desirable aromas including "fragrance," "favorable and strong aftertaste," "thickness of taste," and "herbaceous smell," while its alcohol concentration is low.

The low-alcohol beverage of the present invention has the alcohol concentration, the sake meter value, the amino acid content, and the acidity within the above-mentioned specific ranges, respectively, and/or the pantolactone content and the eugenol content within the above-mentioned specific ranges, respectively, and may contain various other components, such as polyphenol, oligosaccharide, etc., as long as they do not interfere with the solution of the problems of the present invention.

The low-alcohol beverage of the present invention can also be imparted with a scent of barrel by oak chips or other means to make the low-alcohol beverage more palatable.

### [Organic acid content]

The organic acid content of the low-alcohol beverage of the present invention is not particularly limited, but for example, the citric acid content is preferably 3.00 mg/mL or more, more preferably 3.50 mg/mL to 4.50 mg/mL.

The organic acid content is measured by the method as described in the Examples below.

### [Brix]

The Brix of the low-alcohol beverage of the present invention is not particularly limited, but is preferably 9% to 15%, more preferably 10% to 12%.

The Brix is measured by the method as described in the examples below. The Brix is a physical quantity and is used as sugar content (soluble solid content) to measure the content of sugar, such as sucrose (commonly known as table sugar), fructose, invert sugar, glucose, etc.

### [Glucose concentration]

The glucose concentration of the low-alcohol beverage of the present invention is not particularly limited, but is preferably 1 % by mass to 6 % by mass, more preferably 2 % by mass to 4% by mass.

The glucose concentration is measured by the method as described in the examples below.

The color of the low-alcohol beverage of the present invention is not particularly limited, but red is preferable from the standpoint of exhibiting a red wine-like good appearance. Methods of obtaining the low-alcohol beverage with the red color comprise a method by using ancient rice, particularly black rice, as a fermentation raw material, and a method by adding food colorants and natural pigments in the production method according to one embodiment of the present invention as recited above.

A non-limiting specific embodiment of the low-alcohol beverage according to one embodiment of the present invention is exemplified as follows:
Alcohol concentration: 11.2% (v/v),
Sake meter value: +3,
Amino acid content: 2.6,
Acidity: 7.5.

A non-limiting specific embodiment of another embodiment of the present invention is exemplified as follows:
Alcohol concentration: 11.2% (v/v),
Pantolactone content: 1,737 ppb,
Eugenol conten: 173 ppb.

From the above, according to the low-alcohol beverage of the present invention, since the low-alcohol beverage has the alcohol concentration, the sake meter value, the amino acid content, and the acidity within the above ranges, its sweetness is reduced, and the appropriate sourness and *"umami"* are enhanced, and then these tastes and alcohol taste are well perceived, while the alcohol concentration is low. Therefore, the low-alcohol beverage of the present invention is suited to alcohol during meals, and is particularly compatible with Western food. Also, according to the low-alcohol beverage of the present invention, since the low-alcohol beverage has the pantolactone content and the eugenol content in the above ranges, desirable aromas such as "fragrance," "favorable and strong aftertaste," "thickness of taste," and "herbaceous smell" are imparted while alcohol concentration is low, resulting in that it has high palatability.

Also, the production method of the present invention can produce a low-alcohol beverage having a low alcohol concentration as well as sweetness reduced. It is thought that in the high-temperature decomposition treatment, the fermentation raw material is subjected to the relatively short period of high temperature treatment, which causes the saccharification of the fermentation raw material to become relatively short period, therefore, its glucose production become relatively low. Then the resulting material with such the low glucose concentration is subjected to the short period of low-temperature fermentation treatment, which causes the sweetness of the beverage to be reduced (sake meter value become higher) while the alcohol concentration is low. Also, according to the production method of the present invention, the low-alcohol beverage with the appropriate sourness and *umami* enhanced can be produced. It is thought that due to the use of a rice-saccharified liquid as a fermentation raw material in the high-temperature decomposition treatment, the amino acid content become high, and due to the use of the rice *koji* made using the yellow *koji* mold and the rice *koji* made using the white *koji* mold as a fermentation raw material, sourness become strong. Furthermore, according to the production method of the present invention, the low-alcohol beverage can be produced with the extremely high content of the scent components pantolactone and eugenol compared to ordinary sake and other beverages. In addition, according to the production method of the present invention, the solid-liquid separation treatment can contribute to producing the low-alcohol beverage that has clarity and has reduced unnecessary substances and undesirable flavors.

The present invention will now be recited in further detail with reference to the following examples, which are not intended to limit the present invention. The present invention can take various forms to the extent that the objectives of the present invention are achieved.

### Examples

### [Example 1: Production of test alcohol beverage]

### 1. Production of test alcohol beverage 1

### (1-1) Saccharified liquid preparation

A non-glutinous rice-saccharified liquid was prepared according to the method as described in Example A-1 of Patent No. JP6243475, as follows.

Non-glutinous rice, liquefying enzyme (a-amylase), and warm water (50°C to 60°C) were added to a mixing tank, and liquefied (emulsified) by heating at 80°C for 10 minutes to obtain an emulsified liquid. The mixing ratio of non-glutinous rice to warm water was 100 non-glutinous rice to 110 warm water, and the liquefying enzyme was placed in an amount of 1/3,300 of the rice weight.

The resulting emulsified liquid was then saccharified using a steam injection processor ("Rotatherm", Gold peg International) to obtain a non-glutinous rice-saccharified liquid. Saccharification was performed by constantly blowing steam at 110°C from the outside such that the steam was delivered throughout the inside of the processor from multiple points, and while stirring the emulsified liquid, transferring it from the loading port to the discharge port of the processor. During the transfer, the temperature of the inside of the processor was maintained at a predetermined temperature. The steam injection was performed for 1.5 minutes. After that, the saccharified liquid discharged from the discharge port was then transferred to an evaporation tank. The liquid was concentrated in the tank to remove moisture which is equivalent to about 10% of the injected steam. The glucose concentration of the resulting non-glutinous rice-saccharified liquid was measured using a commercially available glucose measurement kit (Fujifilm Wako Pure Chemical Corporation), and found to be 1.07% by mass.

### (1-2) High-temperature decomposition treatment

In a mixing tank, 360 g of the resulting non-glutinous rice-saccharified liquid obtained in (1-1) above, 60 g of steamed ancient rice (black rice), 60 g of a rice *koji* made using a yellow *koji* mold, 60 g of a rice *koji* made using a white *koji* mold, and 360 mL of water were placed, and high-temperature decomposition treatment was conducted at 55°C for 3 hours to obtain a *moromi.*

### (1-3) Fermentation treatment

A yeast (Kyokai yeast No. 701) is added into a brewing vessel to be 1.0×10⁶ cells /mL relative to 900 g of the resulting *moromi* obtained in (1-2), and fermentation treatment was conducted at 15°C for 5 days to obtain a mature *moromi.*

### (1-4) Solid-liquid separation treatment

The resulting mature *moromi* obtained in (1-3) above was filtered overnight using a filter paper (No. 2, ADVANTEC) to obtain test alcohol beverage 1.

### 2. Production of test alcohol beverage 2

The test alcohol beverage 2 is obtained in the same manner as (1-2) above, except that 180 g of steamed rice (non-glutinous rice) was used instead of non-glutinous rice-saccharified liquid, and the amount of water was changed to 486 mL in order to match the moisture content of non-glutinous rice-saccharified liquid with that of steamed rice.

### 3. Production of test alcohol beverage 3

The test alcohol beverage 3 was obtained in the same manner, except that the fermentation treatment described in (1-3) above was performed without the high-temperature decomposition treatment in example (1-2) above.

### 4. Production of test alcohol beverage 4

The test alcohol beverage 4 was obtained according to the method as described in production example 4 of Patent Document 3 (JP-A-2008-43299), as follows.

That is, 1.8 kg of black rice was washed, then soaked overnight in 5 L of water, and boiled for 1 hour. The temperature was then reduced to 55°C, 2 g of starch decomposing enzyme and 200 g of a rice *koji* made using a white *koji* mold were added, and saccharification was performed for 24 hours. The temperature was then set to 32°C, and 2 g of a white *koji* mold was added, and citric acid fermentation was conducted for 3 days. After that, the resulting product was squeezed by a squeezer to obtain 5.1 L of a squeezed liquid and 1.7 kg of residue. A yeast was added to 5.1 L of the liquid, and alcohol fermentation was conducted for 5 days at a product temperature of 15 to 20°C. Subsequently, filtration was performed.

### [Example 2: Component analysis evaluation of test alcohol beverages]

### 1. Measurement method

### (1-1) Alcohol concentration and sake meter value

The alcohol concentration (alcohol content) is the volume concentration of alcohol (ethanol) relative to the total volume of the sample, expressed as a percentage. The measurement temperature for the volume concentration was 15° C, as stipulated by the Liquor Tax Law of Japan. The sake meter value is a value that presents the specific gravity of sake relative to water. The alcohol concentration and the sake meter value were each measured by a method with a flotation meter for a sake meter value according to the analysis method for sake of the National Tax Agency.

### (1-2) Brix

The Brix is a physical quantity and is used to measure the content of sugars. The Brix was measured using a digital refractometer ("RX-5000a"; Atago Co., Ltd.) at a temperature of test alcohol beverages of 15°C.

### (1-3) Glucose concentration, amino acid content and acidity

The glucose concentration was measured using a commercially available glucose measurement kit (Fujifilm Wako Pure Chemical Corporation) according to the established method. The amino acid content and acidity were each measured by a method with a pH meter according to the prescribed analysis method for sake of the National Tax Agency.

### (1-4) Organic acid content

The organic acids are determined by HPLC according to the established method.

### 2. Evaluation result of test alcohol beverage 1

The test alcohol beverage 1 was measured for alcohol concentration, Brix, glucose concentration, amino acid content, acidity, sake meter value, and various organic acid contents. The results are shown in Table 1. In addition, the result of measurements of commercially available sake 1 ("Aizu Homare Junmai Daiginjo," Homare Sake Brewery Co.,Ltd.), commercially available sake 2 ("Koshinokanbai Betsuatsurae Ginjo," Ishimoto Sake Brewery Co., Ltd.), and commercially available red wine 1 ("yellow tail Cabernet Sauvignon," Sapporo Breweries Limited), are also shown in Table 1, as comparative alcohol beverages.

**[Table 1]**

| General analysis | | | | |
|---|---|---|---|---|
| | Test alcohol beverage 1 | Sake 1 | Sake 2 | Red wine 1 |
| Alcohol concentration (%(v/v)) | 11.2 | 15.8 | 16.2 | 16.5 |
| Brix (%) | 11.1 | 16.6 | 17.0 | 9.6 |
| Glucose concentration (wt%) | 3.2 | 3.1 | 2.8 | 0.3 |
| Amino acid content (ml) | 2.6 | 1.1 | 1.5 | 1.7 |
| Acidity (ml) | 7.5 | 3.1 | 3.0 | 7.2 |
| Sake meter value | +3 | +1 | +5 | +4 |

| Organic acid content (mg/ml) | | | | |
|---|---|---|---|---|
| | Test alcohol beverage 1 | Sake 1 | Sake 2 | Red wine 1 |
| Citric acid | 3.78 | 0.08 | 0.08 | 0.00 |
| Tartaric acid | 0.00 | 0.00 | 0.00 | 2.41 |
| Malic acid | 0.18 | 0.25 | 0.25 | 0.11 |
| Succinic acid | 0.48 | 0.25 | 0.25 | 0.70 |
| Lactic acid | 0.41 | 0.34 | 0.34 | 1.30 |

Table 1 shows that the test alcohol beverage 1 had a lower alcohol concentration than the red wine, but had a glucose concentration comparable with the sake. However, the test alcohol beverage 1 had an acidity comparable with the red wine and also had a higher amino acid content than the red wine and sake. In addition, the test alcohol beverage 1 was found to have a higher content of citric acid, among organic acids, than the sake and red wine. From the above, when the test alcohol beverage 1 was consumed, the sweetness thereof was less perceived, and even though it had a lower alcohol concentration than the red wine, the sourness and strong alcohol taste were perceived.

### 3. Evaluation result of test alcohol beverage 4

The test alcohol beverage 4 was measured for the alcohol concentration, glucose concentration, acidity and sake meter value, and compared with the test alcohol beverage 1. The results are shown in Table 2.

**[Table 2]**

| | Test alcohol beverage 1 | Test alcohol beverage 4 |
|---|---|---|
| Alcohol concentration (% (v/v)) | 11.2 | 5.8 |
| Glucose concentration (wt%) | 3.2 | 16.0 |
| Acidity (ml) | 7.5 | 4.0 |
| Sake meter value | +3 | -30 |

Table 2 shows that the test alcohol beverage 1 had a higher alcohol concentration and sake meter value than the test alcohol beverage 4, but the glucose concentration was lower. This may be due to the following reasons. That is, in the test alcohol beverage 1, the fermentation raw material comprising non-glutinous rice-saccharified liquid, ancient rice and rice *koji,* is subjected to the high-temperature decomposition treatment for 3 hours, whereas in the test alcohol beverage 4, the fermentation raw material consisting of starch decomposing enzyme, steamed black rice and rice *koji* is subjected to saccharification treatment for 24 hours. Therefore, since the test alcohol beverage 4 undergoes a longer period of saccharification treatment than the test alcohol beverage 1, it is expected to produce more glucose than the test alcohol beverage 1, resulting in a higher glucose concentration and thus a lower sake meter value.

### [Example 3: Evaluation of effect of using non-glutinous rice-saccharified liquid on amino acid content and filtrate collection rate]

The test alcohol beverages 1 and 2 were compared for amino acid content and filtrate collection. The results are shown in Table 3.

The filtrate collection rate (%) was calculated: the resulting mature *moromi* obtained in the fermentation was passed through a filter paper (No. 2, ADVANTEC), and the amount of filtrate was weighted and divided by the total amount of the mature *moromi.*

**[Table 3]**

| | Test alcohol beverage 1 | Test alcohol beverage 2 |
|---|---|---|
| Filtrate collection rate (%) | 68.0 | 52.3 |
| Amino acid content | 2.6 | 1.8 |

| | | |
|---|---|---|
| *Values are average values (n=3) | | |

Table 3 shows that both of the filtrate collection rate and the amino acid content were higher in the test alcohol beverage 1 in which non-glutinous rice-saccharified liquid was used than that in test alcohol beverage 2 in which non-glutinous rice-saccharified liquid was not used.

### [Example 4: Evaluation of effect of high-temperature decomposition treatment on taste components]

The test alcohol beverages 1 and 3 were compared for the alcohol concentration, glucose concentration, amino acid content and acidity. The results are shown in Table 4.

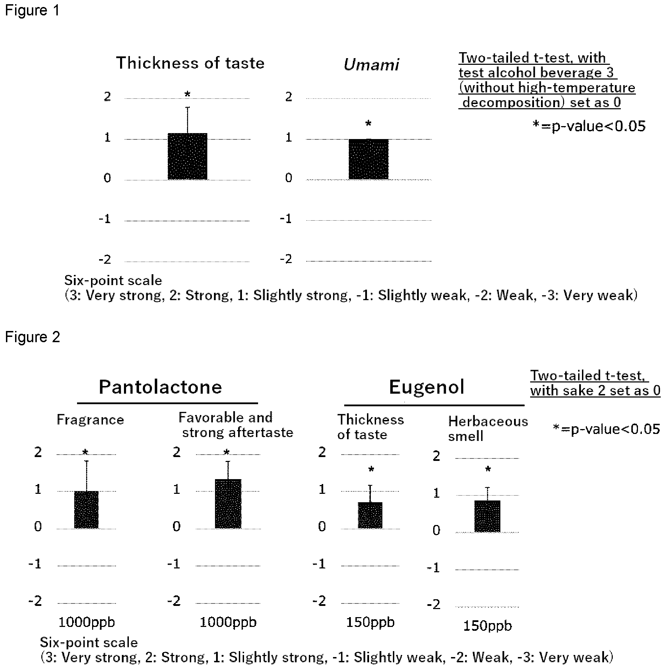

The test alcohol beverages 1 and 3 were also tested for "thickness of taste" and *"umami"* by sensory evaluation. The sensory evaluation was conducted by seven panelists with discriminating ability, and scored for the test alcohol beverage 1 on a six-point scale based on the following criteria for "thickness of taste" and *"umami"* with respective to the test alcohol beverage 3 as control ("0"). A two-tailed t-test was performed on the obtained scores (p<0.05). The results are shown in Fig.1.
3: Very strong
2: Strong
1: Slightly strong
-1: Slightly weak
-2: Weak
-3: Very weak

The "thickness of taste" was defined as the strength and persistence of multiple favorable tastes, including *umami,* which are perceived after putting the test alcohol beverage in the mouth. The *"umami"* was defined as one of the basic tastes, along with sweetness, sourness, saltiness, and bitterness as usually known, which is perceived after the test alcohol beverage was put in the mouth.

**[Table 4]**

| | Test alcohol beverage 1 | Test alcohol beverage 3 |
|---|---|---|
| Alcohol concentration (% (v/v)) | 11.2 | 10.1 |
| Glucose concentration (wt%) | 3.2 | 2.4 |
| Amino acid content | 2.6 | 1.2 |
| Acidity | 7.5 | 5.1 |

The results of Table 4 and Fig.1 found that the test alcohol beverage 1 obtained by the high-temperature decomposition treatment using the fermentation raw material including non-glutinous rice-saccharified liquid, ancient rice, and rice *koji,* has an equivalent alcohol concentration and glucose concentration, but a higher amino acid content and acidity than the alcohol beverage 3 obtained without the high-temperature decomposition treatment, thereby thickness of taste and *umami* of the beverage 1 were enhanced.

The results of Examples 2 to 4 collectively indicated that the test alcohol beverage 1 obtained through the high-temperature decomposition treatment and a short-period of low-temperature fermentation treatment using the fermentation raw material comprising non-glutinous rice-saccharified liquid, ancient rice, and rice *koji,* has a lower alcohol concentration than the red wine, but has a higher amino acid content and a higher acidity. Thus, when consumed, the sweetness of the beverage was reduced while the sourness and alcohol taste could be perceived well similar to the red wine.

### [Example 5: Evaluation of influence of scent components in the test alcohol beverage]

The scent components were determined for the test alcohol beverage 1 by the following method using GC/MS. The scent components were extracted using ethyl acetate.
Measuring equipment: 7890B-5977MSD (AgilentTechnologies) ,
Measurement mode: SCAN column: DB-WAX (length 60 m, diameter 0.25 mm, and film thickness 0.25 µm) (Agilent Technologies),
Inlet temperature: 250°C,
Temperature conditions: held at 40°C (3 min) → raised to 250°C at 6°C/min → held for 15 min; Carrier gas: high-purity helium, constant pressure mode at 229 kPa,
Scanning mass range: 30 m/z to 250 m/z,
Ionization method: El.

The results of the scent component measurements showed that the test alcohol beverage 1 contained high levels of pantolactone and eugenol. The results of the measurement of pantolactone and eugenol contents in the test alcohol beverage 1 are shown in Table 5. Table 5 also shows the measurement results of commercially available sake 2 ("Koshino-Kanbai Betsuatsurae Ginjo, " Ishimoto Sake Brewery Co., Ltd.) and test alcohol beverage 4 (alcohol beverage as described in Patent Document 3) as comparative alcohol beverages.

In addition, the test alcohol beverage 5 was prepared, in which in such a way that 1,000 ppb of pantolactone and 150 ppb of eugenol are present, 500 µL of each solution was added to 5 mL of the commercially available sake 2. Pantolactone was tested for "fragrance" and "favorable and strong aftertaste" and eugenol was tested for "thickness of taste" and "herbaceous smell" by sensory evaluation. The sensory evaluation was conducted by seven panelists with discriminating ability, and scored using the sake 2 which has no addition of pantolactone and eugenol as control ("0") on a six-point scale based on the following criteria. A two-tailed t-test was performed on the scores obtained (p < 0.05). The results are shown in Fig.2.
3: Very strong
2: Strong
1: Slightly strong
-1: Slightly weak
-2: Weak
-3: Very weak

The "fragrance" was defined as a mature aroma-like flavorful smell that is perceived after putting the test beverage in the mouth. The "favorable and strong *aftertaste(oshi-aji)"* was defined as a taste that left a strong lingering aftertaste after the test beverage was put in the mouth. The "herbaceous smell" was defined as a smell like herbs including gloves and bay leaves that is perceived after putting the test beverage in the mouth.

**[Table 5]**

| | Test alcohol beverage 1 | Test alcohol beverage 4 | Sake 2 (*Koshinokanbai*) |
|---|---|---|---|
| Pantolactone (ppb) | 1737 | 591 | 188 |
| Eugenol (ppb) | 173 | 82 | ND |

| | | | |
|---|---|---|---|
| 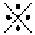 R² ≧ 0.995 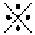 ND:S/N < 3.0 | | | |

The results in Table 5 show that test alcohol beverage 1 contains more pantolactone and eugenol than the test alcohol beverage 4 (alcohol beverage as described in Patent Document 3) and sake 2 for comparison. The results in Fig.2 show that the test alcohol beverage 5, which is sake 2 with pantolactone and eugenol added, has "fragrance," "aftertaste," "thickness of taste," and "herbaceous smell" enhanced compared to sake 2. Besides, these points in the test alcohol beverage 1 were as good as or better than that in the test alcohol beverage 5. These results indicate that the test alcohol beverages 1 and 5 have favorable aromas and high palatability due to the pantolactone and eugenol contained in them, and that they can be excellent alcohol during meals, especially with Western food.

### [Example 6: Flavor evaluation of test alcohol beverages]

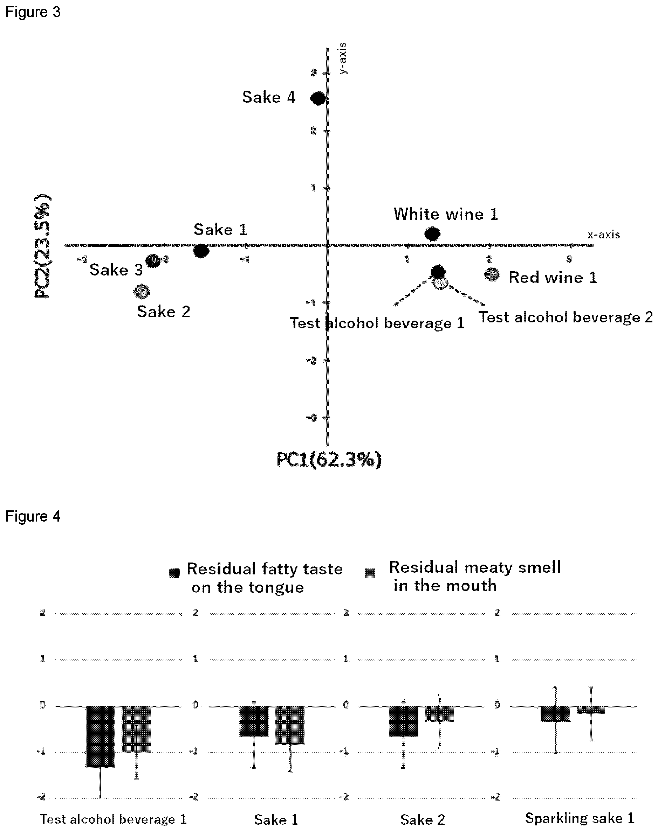

In addition to the alcohol beverages 1 and 2, commercially available red wine 1, and commercially available sake 1 and 2, commercially available sake 3 ("Dewazakura Ginjoshu, " Dewazakura sake brewery Co.,Ltd.), commercially available sake 4 ("Edo no Utage Junmai Koshu, " Yokotashuzou Corporation), and commercially available white wine 1 ("Yellow Tail Chardonnay" Sapporo breweries limited) were determined for sweetness, sourness, *umami,* bitterness, and saltiness using a taste sensor (taste discriminator "TS-5000Z",lntelligent sensor technology, Inc.). The results are shown in Fig.3. The five tastes of sweetness, sourness, *umami,* bitterness, and saltiness were measured by the taste sensor, and principal component analysis was performed, and the principal component scores are plotted in Fig.3. The vertical (y-axis) and horizontal (x-axis) axes in Fig.3 indicate the first and second principal components. In Fig.3, the most influential factors in the positive direction of the horizontal and vertical axes were identified as sourness and bitterness, respectively, of the five tastes.

From the results in Fig.3, it was supposed that test alcohol beverages 1 and 2 have stronger characteristics of sourness than the sake, and have characteristics of flavor similar to the red wine.

### [Example 7: Sensory evaluation of compatibility of test alcohol beverages with Western food]

In addition to the test alcohol beverage 1 and commercially available sake 1 and 2, commercially available sparkling sake 1 ("Ichinokura Sparkling Junmai-shu", Ichinokura Co., Ltd.) was tested for compatibility with Western food through sensory evaluation. The sensory evaluation was conducted by seven panelists with discriminating ability. They ate a steak together with the test beverages, and scored on a six-point scale based on the following criteria regarding "residual fatty taste on the tongue" and "residual meaty smell in the mouth". A two-tailed t-test was performed on the scores obtained (p < 0.05). The results are shown in Fig.4.
3: Very strong
2: Strong
1: Slightly strong
-1: Slightly weak
-2: Weak
-3: Very weak

The results in Fig.4 show that the test alcohol beverage 1 is more effective in reducing "residual fatty taste on the tongue" and "residual meaty smell in the mouth" compared to the sake and sparkling sake. These results also indicate that the test alcohol beverage 1 can be excellent alcohol during meals compatible with Western food.

### [Example 8: Quality evaluation of test alcohol beverages and similar product)

As similar with the test alcohol beverage 1, the commercially available sake 5 ("Musuhi", Terada Honke Co., Ltd.) cited in the Non-Patent Document 1 has ancient rice as a raw material, and has the amino acid content of 1 to 6, which is higher than that of ordinary sake. This reason is assumed that due to the fact that the majority of rice as a raw material is unpolished rice, the protein content becomes higher, and due to the fact that it has no filtration in the production process, lees components remain.

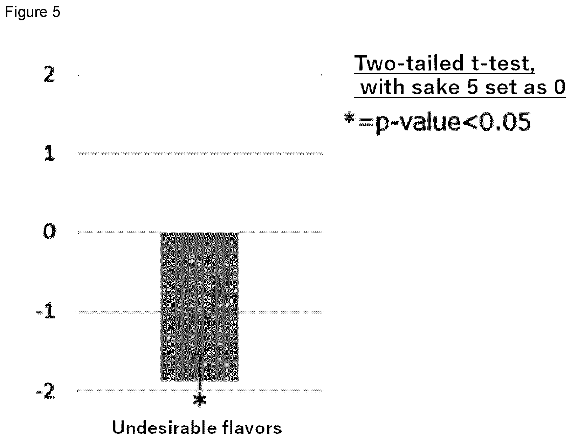

The sake 6 was prepared by filtrating the commercially available sake 5, and the strength of "undesirable flavors" thereof was compared with that of the commercially available sake 5. The sensory evaluation was performed by eight panelists, and scored on a six-point scale based on the following criteria. A two-tailed t-test was performed on the scores obtained (p < 0.05). The results are shown in Fig.5. The "undesirable flavors" are defined as strong unfavorable tastes, such as millet odors derived from rice as a raw material, bitterness, and astringency in a state out of harmony with other constituent tastes such as sweetness, sourness, *umami,* and saltiness.
3: Very strong
2: Strong
1: Slightly strong
-1: Slightly weak
-2: Weak
-3: Very weak

The results in Fig.5 show that the sake 6 has undesirable flavors reduced than the commercially available sake 5, suggesting that the filtration directly affects the reduction of the undesirable flavors and indirectly affects ease of drinking and the compatibility with Western food. The commercially available sake 5 has a lot of undesirable flavors because most of the rice, including rice for *koji* as a raw material, is unpolished rice. Thus, it is unsuitable for alcohol during meals, especially as alcohol during meals with compatiblly with Western food.

In addition, although the undesirable flavors of commercially available sake 5 is reduced by filtration, the test alcohol beverage 1, which does not use unpolished rice for rice for *koji,* is superior, in a viewpoint of undesirable flavors.

The commercially available sake 5, sake 6, and the test alcohol beverage 1 were measured for turbidity using a turbidity meter "UT-21" (Hitachi High-Tech Science Corporation). As a result, the turbidity of commercially available sake 5 was impossible to be measured (460 degrees when diluted 8 times), that of sake 6 was 22.5 degrees, and that of test alcohol beverage 1 was 8.5 degrees.

These results show that the commercially available sake 5 was turbid, but filtration allowed its appearance to become clearer, however, the test alcohol beverage 1 was clearer than it. Thus, from the point of the turbidity, it was assumed that the test alcohol beverage 1 had less unnecessary substances and undesirable flavors than the commercially available sake 5 and sake 6.

### Industrial Applicability

The low-alcohol beverage according to one embodiment of the present invention has a low alcohol concentration, and concurrently it has a reduced sweetness, an appropriate sourness and an *umami* enhanced such that tastes are improved, so that it can be provided as alcohol during meals, especially as alcohol during meals compatible with Western food. Furthermore, the low-alcohol beverage according to one embodiment of the present invention has an extremely high content of scent components pantolactone and eugenol compared to that of ordinary sake, so that a hight degree of palatability is imparted, as a result, it can be provided as a low-alcohol beverage with high added value.

## Claims

1. A low-alcohol beverage, having an alcohol concentration of 6% (v/v) to 13% (v/v), a sake meter value of -30 to +10, an amino acid content of 2.0 to 10.0, and an acidity of 5.0 to 10.0.

2. The low-alcohol beverage according to claim 1, wherein the low-alcohol beverage is a low-alcohol fermented beverage and a fermentation raw material comprises a rice-saccharified liquid and a rice *koji.*

3. The low-alcohol beverage according to claim 2, the fermentation raw material comprises further ancient rice.

4. The low-alcohol beverage according to claim 1, further having a citric acid content of 3.00 mg/mL or more.

5. The low-alcohol beverage according to claim 1, further having a turbidity of 50 degrees or less.

6. The low-alcohol beverage according to any one of claims 1 to 5, further exhibiting a color of red.

7. A low-alcohol beverage, having an alcohol concentration of 6% (v/v) to 13% (v/v), a pantolactone content of 800 ppb to 10,000 ppb, and a eugenol content of 100 ppb to 10,000 ppb.

8. A method of producing a low-alcohol beverage, comprising the following steps:
subjecting a fermentation raw material comprising a rice-saccharified liquid, ancient rice and a rice *koji* to high-temperature decomposition treatment at 50°C to 80°C for 1 hour to 10 hours to obtain a *moromi;*
subjecting the *moromi* to fermentation treatment using a yeast at 10°C to 25°C for 3 days to 7 days to obtain a mature *moromi;* and
subjecting the mature *moromi* to solid-liquid separation treatment to obtain the low-alcohol beverage.

9. The method according to claim 8, wherein the rice *koji* comprises a rice *koji* made using a yellow *koji* mold and a rice *koji* made using a white *koji* mold.

10. The method according to claim 8, wherein the ancient rice is black rice.

11. The low-alcohol beverage according to claim 1 or 7, wherein the low-alcohol beverage is produced by the method according to any one of claims 8 to 10.
